# EUROPEAN PATENT APPLICATION

(11) **EP 1 505 593 A2**
(43) Date of publication of application: **09.02.2005**
(21) Application number: 04016149.9
(22) Date of filing: 08.07.2004
(51) Int. Cl.: G11B 20/00

(54) **Data storage media with sector data control information**

(30) Priority: 31.07.2003 US 632756
(71) Applicant: Hewlett-Packard Development Company, L.P., Houston, TX 77070 (US)
(72) Inventor: Weirauch, Charles R., Loveland CO 80537 (US)
(74) Representative: Schoppe, Fritz, Dipl.-Ing.

(57) **Abstract**

On a data storage medium (104), sector headers (202) include data that are used to control behavior of a drive (102) reading the data storage medium. For example, the header data may specify, for each sector, whether a reading drive is permitted to send unencrypted sector data to a requesting device (100), whether authentication of a requestor is required, or whether the sector data can be transferred outside the drive.

## Description

### FIELD OF INVENTION

This invention relates generally to data storage media.

### BACKGROUND

For data storage media, for example compact disks (CD's), digital versatile disks (DVD's), magnetic tapes, hard disks, etc., the smallest amount of data that can be read is often called a sector. Computer file systems are often designed to read and write all sectors in the user data area. For media with entertainment content, for example music and video, some data exists in scrambled form in some of the user data sectors, while other data (for example descrambling keys or decryption keys) related to copy protection need to be used by the reading drive only. The data within the user data area intended for use only by the drive need to be inaccessible to unauthorized requestors. However, typically, if a medium is read by a computer, all sectors in the user data area can be read and passed to a host processing system. There is a need for limiting access to data sectors on a sector by sector basis.

### SUMMARY

On a data storage medium, sector headers include data that are used to control behavior of a drive reading the data storage medium. As examples, the header data may specify, for each sector, whether a reading drive is permitted to send unencrypted sector data to a requestor, whether authentication of a requestor is required, or whether the sector data can be transferred outside the drive in any form and regardless of authentication.

### BRIEF DESCRIPTION OF THE DRAWINGS

Figure 1 is a block diagram of a system including a drive and a data storage medium.
Figures 2A and 2B are block diagrams illustrating data on the data storage medium illustrated in figure 1.

### DETAILED DESCRIPTION

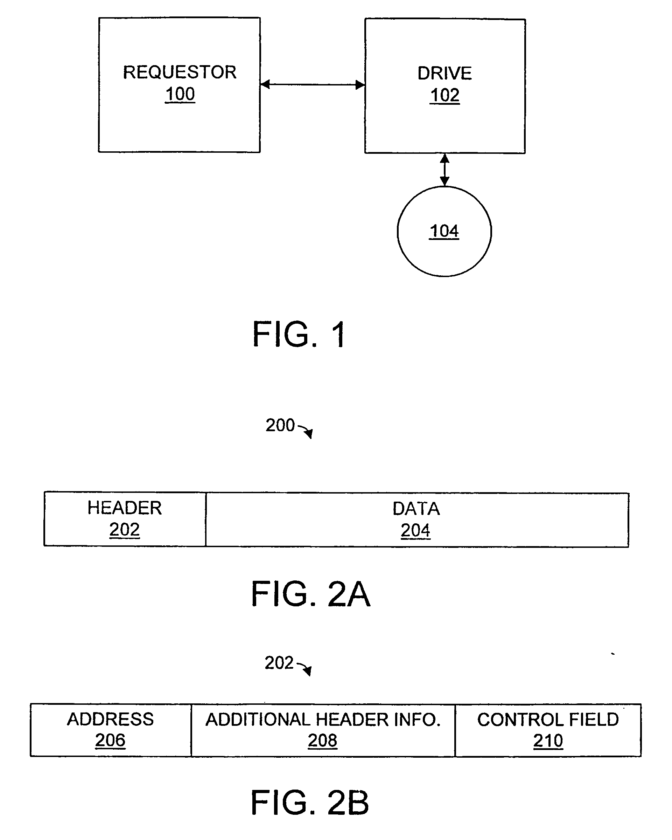

Figure 1 is a block diagram of a system, including a requestor 100, a drive 102, and a data storage medium 104. The requestor may be a computer system or entertainment system or system in which the drive is installed. Alternatively, the requestor may be a remote system, communicating for example over a network. The drive may be part of a larger system or may be a standalone device. The data storage medium may be a disk, a tape, or other computer readable media, and may or may not be removable.

Figure 2A illustrates an example data sector 200 on the data storage medium (figure 1, 104). The data sector includes a header 202 and a data area 204. Figure 2B illustrates an example of additional detail for the header 202. In figure 2B, the header 202 includes an address 206, additional header information 208, and a control field 210. The address and additional header information are not important to the invention, and are intended to illustrate typical header data. The order of 206, 208, and 210 is not important. Control field 210 comprises at least one control bit discussed in more detail below.

It is common in media formats for sector headers to have some undefined bits reserved for future use or future standards, or as additional bits used to organize the sector in preparation for applying error correction codes. Bits that are undefined in media standards could be used for control bits in drives that recognize the bits. Preferably, media with the control bits have specifications other than the control bits so that only conforming drives can read the media, and all drives capable of reading media having the control bits would be required to conform to the restrictions designated by the control bits.

One example control bit controls whether a drive that is reading the medium is permitted to send the sector data 204, unencrypted, to a requestor. Another example control bit controls whether a drive that is reading the medium is required to receive authentication from the requestor before sending the sector data (whether encrypted or unencrypted). Authentication includes passwords, predetermined data sequences exchanged between the requestor and the drive, biometric data from a operator, or other methods of authenticating the authority of the requestor to receive the data. Another example control bit prohibits any transfer of the sector data outside of the drive. That is, the control bit can be used for a sector containing data that is used by the drive for internal purposes, such as descrambling or decrypting of data. If the control bits prohibit transfer of the data, the drive may assert an error condition, or may send null data.

The following further illustrates the effect of the bits, for each possible state, where "X" indicates any state.

| BIT3 | BIT2 | BIT1 | ACTION REQUIRED BY DRIVE |
|---|---|---|---|
| 0 | 0 | 0 | Send unencrypted data to requestor, regardless of authentication validity. |
| 0 | 0 | 1 | Send unencrypted data to requestor only if authentication is valid. |
| 0 | 1 | 0 | Send encrypted data to requestor, regardless of authentication validity. |
| 0 | 1 | 1 | Send encrypted data to requestor only if authentication is valid. |
| 1 | X | X | Do not send sector data to requestor |

While single bits are used in the above example, multiple-bit header data may be used to specify the required action. Alternatively, a single bit may be used to designate a limited combination of the actions specified above. For example, instead of BIT1 and BIT2, there may be a single bit, BITN, where BITN=0 may be used to specify the same action as specified above for BIT1 = 0 and BIT2=0, and BITN = 1 may be used to specify the same actions as specified above for BIT1 = 1 and BIT2 = 1 (the other action combinations for BIT1 and BIT2 would not be used). In addition, BIT2 may not exist explicitly, but may be part of other copy protection requirements. That is, for some media as a whole, the drive may be required to send encrypted data only. Even if there are requirements for the entire medium, there is still a need for some control on a sector by sector basis.

## Claims

1. A data storage medium (104), comprising:
a sector (200), the sector including header data (202) and sector data (204); the header data specifying whether a drive (102) reading the data storage medium is required to receive valid authentication of the requestor (100) before sending the sector data to the requestor.

2. The data storage medium of claim 1, further comprising:
the header data specifying whether the drive reading the data storage medium is permitted to send the sector data in an unencrypted form to a requestor.

3. The data storage medium of claim 2, further comprising:
the header data specifying whether the drive reading the data storage medium is permitted to send the sector data to the requestor.

4. The data storage medium of claim 1, further comprising:
the header data specifying whether the drive reading the data storage medium is permitted to send the sector data to the requestor.

5. A data storage medium (104), comprising:
a sector (200), the sector including header data (202) and sector data (204); the header data specifying whether a drive (102) reading the data storage medium is permitted to send the sector data in an unencrypted form to a requestor (100).

6. A data storage medium, comprising:
a sector (200), the sector including header data (202) and sector data (204); the header data specifying whether a drive (102) reading the data storage medium is permitted to send the sector data to a requestor (100).
